# EUROPÄISCHE PATENTSCHRIFT

(11) **EP 3 738 425 B1**
(45) Veröffentlichungstag und Bekanntmachung des Hinweises auf die Patenterteilung: **23.02.2022**
(21) Anmeldenummer: 19175188.2
(22) Anmeldetag: 17.05.2019
(51) Int. Cl.: A01D 34/71

(54) **RASENMÄHER**
LAWN MOWER
TONDEUSE À GAZON

(43) Veröffentlichungstag der Anmeldung: 18.11.2020
(73) Patentinhaber: Andreas Stihl AG & Co. KG, 71336 Waiblingen (DE)
(72) Erfinder: DUREGGER, Georg, 6342 Niederndorf (AT); SCHEID, Marco, 83088 Kiefersfelden (DE)
(74) Vertreter: Reinhardt, Annette

(56) Entgegenhaltungen:
- EP-A1- 1 584 224
- EP-B1- 1 584 224
- US-A1- 2003 182 919
- US-A1- 2017 202 140
- US-A1- 2018 184 590

## Beschreibung

Die Erfindung betrifft einen Rasenmäher nach dem Oberbegriff des Anspruchs 1.

Aus der US 2003/0182919 A1 ist ein Rasenmäher mit einer Auswurföffnung zum Auswurf von Schnittgut bekannt, die mittels einer Abdeckvorrichtung abgedeckt wird. Die Abdeckvorrichtung weist eine Abdeckklappe auf, die um eine Schwenkachse schwenkbar gelagert ist. In einem geschlossenen Zustand deckt die Abdeckklappe die Auswurföffnung ab und ist mittels eines Verriegelungsmittels verriegelbar. Zur Entriegelung muss ein in der Abdeckklappe gelagerter Riegel in Richtung quer zur Schwenkachse verschoben werden. Hierbei wird zunächst der Riegel relativ zur Abdeckklappe bewegt, um die Abdeckklappe zu entriegeln, und dann wird die Abdeckklappe relativ zum Gehäuse des Rasenmähers verschwenkt. Die Abdeckvorrichtung umfasst mehrere Einzelteile, wodurch die Herstellung der Abdeckvorrichtung aufwändig ist.

Der Erfindung liegt die Aufgabe zugrunde, einen gattungsgemäßen Rasenmäher derart weiterzubilden, dass er einfach herzustellen ist.

Diese Aufgabe wird durch einen Rasenmäher mit den Merkmalen des Anspruchs 1 gelöst.

Die Erfindung sieht vor, dass die Abdeckklappe relativ zum Gehäuse in Richtung der Schwenkachse beweglich ist, und dass sich die Abdeckklappe durch eine Bewegung der Abdeckklappe in Richtung der Schwenkachse entriegeln lässt.

Dadurch kann die Abdeckvorrichtung so gestaltet sein, dass zum Öffnen und Entriegeln der Abdeckklappe lediglich die Abdeckklappe selbst bewegt werden muss. Die Bewegung eines Riegels relativ zur Abdeckklappe selbst ist nicht erforderlich. Zum Entriegeln und Öffnen der Abdeckklappe wird die Abdeckklappe durch eine Bewegung der Abdeckklappe relativ zum Gehäuse in Richtung der Schwenkachse entriegelt und anschließend durch eine Schwenkbewegung in Richtung um die Schwenkachse geöffnet. Dadurch ist kein gegenüber der Abdeckklappe beweglicher Riegel zur Verriegelung der Abdeckklappe erforderlich. Dadurch lässt sich die Abdeckvorrichtung des Rasenmähers und damit der gesamte Rasenmäher auf einfache Weise herstellen. Die Abdeckvorrichtung des erfindungsgemäßen Rasenmähers umfasst weniger bewegliche Teile und ist daher weniger verschleißanfällig. Es ist lediglich ein geringer Wartungsaufwand erforderlich.

Vorteilhaft umfasst die Abdeckvorrichtung ein Rückstellmittel, das die Abdeckklappe in der Offenposition mit einer Kraft in Richtung auf den geschlossenen Zustand beaufschlagt. Dadurch ist sichergestellt, dass die Abdeckvorrichtung nur geöffnet ist, wenn die Abdeckklappe aufgehalten wird. Ansonsten schließt sich die Abdeckklappe selbstständig. Dadurch ist vermieden, dass der Rasenmäher mit geöffneter Abdeccklappe betrieben wird.

Zweckmäßig ist die Abdeckklappe aufgrund der vom Rückstellmittel ausgeübten Kraft rastfrei aus der Offenposition in den geschlossenen Zustand verstellbar.

In vorteilhafter Weiterbildung der Erfindung umfasst die Abdeckvorrichtung eine Federanordnung.

Vorteilhaft umfasst die Federanordnung eine Drehfeder, die Teil des Rückstellmittels ist. Vorteilhaft ist die Drehfeder das Rückstellmittel. Dadurch wird die Abdeckklappe auf einfache Weise in der Offenposition mit einer Kraft in Richtung auf den geschlossenen Zustand beaufschlagt.

In vorteilhafter Weiterbildung der Erfindung umfasst die Federanordnung eine Axialfeder, die Teil des Verriegelungsmittels ist und zwischen dem Gehäuse und der Abdeccklappe in Richtung der Schwenkachse wirkt. Vorteilhaft wirkt die Axialfeder zwischen einem Grundkörper der Abdeckvorrichtung und der Abdeckklappe in Richtung der Schwenkachse. Dadurch kann die Abdeckvorrichtung auf einfache Weise so gestaltet sein, dass die Abdeckklappe der Abdeckvorrichtung selbstständig verriegelt. Dies erhöht die Sicherheit des Rasenmähers. Die Abdeckvorrichtung kann so gestaltet sein, dass nach einer Öffnung der Abdeckklappe diese wieder selbstständig in den geschlossenen Zustand zurückkehrt und selbstständig verriegelt. Dadurch ist ein Betrieb des Rasenmähers mit offener Abdeckklappe verhindert.

Vorteilhaft ist die Axialfeder eine Druckfeder.

In vorteilhafter Weiterbildung der Erfindung ist die Federanordnung eine kombinierte Axial- und Drehfeder, die sowohl Teil des Rückstellmittels als auch Teil des Verriegelungsmittels ist. Dadurch können Bauteile eingespart werden, und die Abdeckvorrichtung kann auf einfache Weise hergestellt werden. Es ergibt sich ein einfacher, kompakter Aufbau. Es kann aber auch vorgesehen sein, dass die Axialfeder und die Drehfeder getrennt voneinander ausgebildet sind.

In vorteilhafter Weiterbildung der Erfindung weist das Verriegelungsmittel einen ersten Teil an der Abdeckklappe und einen gehäusefesten zweiten Teil auf, wobei sich der erste Teil und der zweite Teil des Verriegelungsmittels im geschlossenen Zustand der Abdeckklappe in einer Verriegelungsposition des geschlossenen Zustands in Richtung der Schwenkachse derart überlappen, dass die Abdeckklappe gegen ein Schwenken um die Schwenkachse gesichert ist. Dadurch kann die Verriegelung der Abdeckklappe im geschlossenen Zustand auf einfache Weise realisiert sein. Dadurch sind für die Verriegelung der Abdeckklappe nur sehr wenige Bauteile erforderlich. Dies ermöglicht eine einfache Herstellung der Abdeckvorrichtung des Rasenmähers und des Rasenmähers selbst. Zweckmäßig ist der zweite Teil des Verriegelungsmittels am Grundkörper festgelegt, und die Abdeckvorrichtung ist mit dem Grundkörper am Gehäuse des Rasenmähers derart festgelegt, dass der Grundkörper relativ zum Gehäuse unverschiebbar ist.

Zweckmäßig ist die Abdeckklappe in Richtung der Schwenkachse relativ zum zweiten Teil des Verriegelungsmittels derart verschiebbar, dass der erste Teil des Verriegelungsmittels und der zweite Teil des Verriegelungsmittels in Richtung der Schwenkachse überlappungsfrei zueinander angeordnet sind. Dadurch ist eine einfache Entriegelung der Abdeckklappe möglich.

Vorteilhaft ist der erste Teil des Verriegelungsmittels einteilig mit der Abdeckklappe ausgebildet. Dadurch können Bauteile eingespart werden, und die Abdeckvorrichtung ist auf einfache Weise herzustellen. Es kann aber auch eine mehrteilige Ausgestaltung von Abdeckklappe und Verriegelungsmittel vorgesehen sein.

Zweckmäßig ist der zweite Teil des Verriegelungsmittels durch eine am Grundkörper festgelegte Sperrkante gebildet. Vorteilhaft ist die Sperrkante einteilig mit dem Grundkörper ausgebildet. Dadurch können Bauteile eingespart werden, und die Abdeckvorrichtung ist auf einfache Weise herzustellen.

Vorteilhaft weist die Sperrkante in Richtung der Schwenkachse eine Auflagefläche auf, gegen die die Federanordnung die Abdeckklappe in der Offenposition der Abdeccklappe vorspannt. Dadurch kann die Abdeckvorrichtung so gestaltet sein, dass die Abdeckklappe erst im geschlossenen Zustand der Abdeckklappe verriegelt werden kann. Weiterhin ist eine Gestaltung der Abdeckvorrichtung derart möglich, dass die Abdeccklappe aus der Offenposition vollkommen selbstständig zunächst in eine Entriegelungsposition des geschlossenen Zustands zurückkehrt und dann selbstständig verriegelt, indem die Abdeckklappe automatisch in die Verriegelungsposition bewegt wird.

Ein Ausführungsbeispiel der Erfindung wird im Folgenden anhand der Zeichnung erläutert. Es zeigen:
- Fig. 1: eine perspektivische Darstellung eines Rasenmähers mit einer Auswurföffnung und einer Abdeckvorrichtung,
- Fig. 2 und 3: perspektivische Darstellungen der Abdeckvorrichtung aus Fig. 1 mit verriegelter Abdeckklappe,
- Fig. 4 und 5: perspektivische Darstellungen der Abdeckvorrichtung aus Fig. 1 mit entriegelter Abdeckklappe,
- Fig. 6 und 7: perspektivische Darstellungen der Abdeckvorrichtung aus Fig. 1, wobei sich die Abdeckklappe in einer Offenposition befindet.

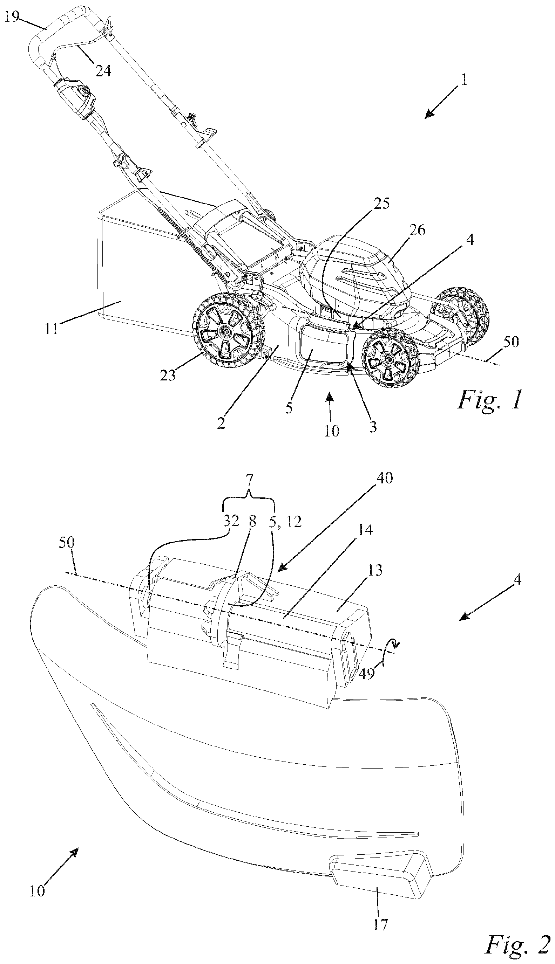

In Fig. 1 ist ein Rasenmäher 1 mit einem Gehäuse 2 gezeigt. Im Ausführungsbeispiel ist das Gehäuse 2 als Mähdeck ausgebildet. Das Gehäuse 2 trägt Räder 23 und einen Motor 25. Die Räder 23 sind drehbar am Gehäuse 2 gelagert. Der Motor 25 ist im Ausführungsbeispiel ein Elektromotor. Es kann aber auch vorgesehen sein, den Motor als Verbrennungsmotor auszubilden. Auf dem Motor 25 ist eine Haube 26 angeordnet. Die Haube 26 deckt den Motor 25 zumindest teilweise ab. Der Rasenmäher 1 weist einen Handgriff 19 zum Schieben des Rasenmähers 1 auf. Der Motor 25 treibt mindestens ein Schneidmesser zum Kürzen von Rasen rotierend an. Der Motor 25 kann über ein Betätigungselement 24 betätigt werden, das am Handgriff 19 angeordnet ist. Das Schnittgut kann entweder in einem Sammelbehälter 11 gesammelt werden, durch eine Auswurföffnung 3 oder einen Heckauswurf (nicht dargestellt) ausgeworfen werden oder zum Mulchen verwendet werden.

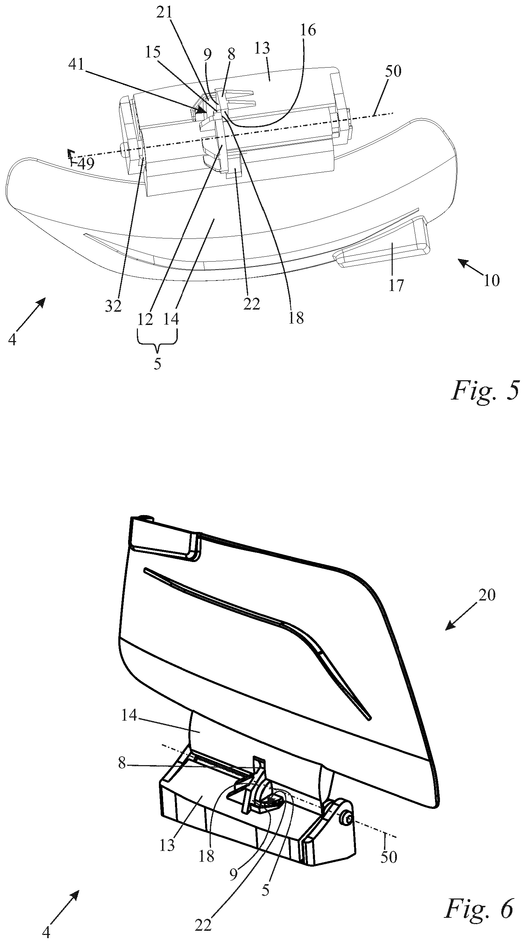

Die Auswurföffnung 3 ist am Gehäuse 2 des Rasenmähers 1 angeordnet. Wenn das Schnittgut im Sammelbehälter 11 gesammelt werden soll - der Rasenmäher 1 also im Sammelbetrieb betrieben wird - ist die Auswurföffnung 3 verschlossen. Dies ist auch bei Auswurf des Schnittguts durch den Heckauswurf und beim Mulchen der Fall. Hierzu weist der Rasenmäher 1 eine Abdeckvorrichtung 4 auf. Die Abdeckvorrichtung 4 ist am Gehäuse 2 festgelegt. Die Abdeckvorrichtung 4 besitzt eine Abdeckklappe 5. Im Sammelbetrieb befindet sich die Abdeckklappe 5 in einem geschlossenen Zustand 10. Im geschlossenen Zustand 10 verschließt die Abdeckklappe 5 die Auswurföffnung 3. Die Abdeckklappe 5 ist um eine Schwenkachse 50 verschwenkbar. Um den Rasenmäher 1 mit geöffneter Abdeckklappe 5 in einem Seitenauswurfbetrieb betreiben zu können, wird die Abdeckklappe 5 geöffnet und auf die Auswurföffnung 3 ein nicht dargestellter Seitenauswurftrichter gesetzt. Der Seitenauswurftrichter wird am Gehäuse 2 in die Auswurföffnung 3 eingehängt und dort gehalten. Die Abdeckklappe 5 liegt dann auf dem Seitenauswurftrichter auf und wird so daran gehindert, von ihrer in Fig. 6 dargestellten Offenposition 20 in ihren in Fig. 1 dargestellten geschlossenen Zustand 10 zurückzukehren. Im geschlossenen Zustand 10 der Abdeckklappe 5 deckt die Abdeccklappe 5 die Auswurföffnung 3 ab. In der Offenposition 20 gibt die Abdeckklappe 5 die Auswurföffnung 3 zumindest teilweise frei.

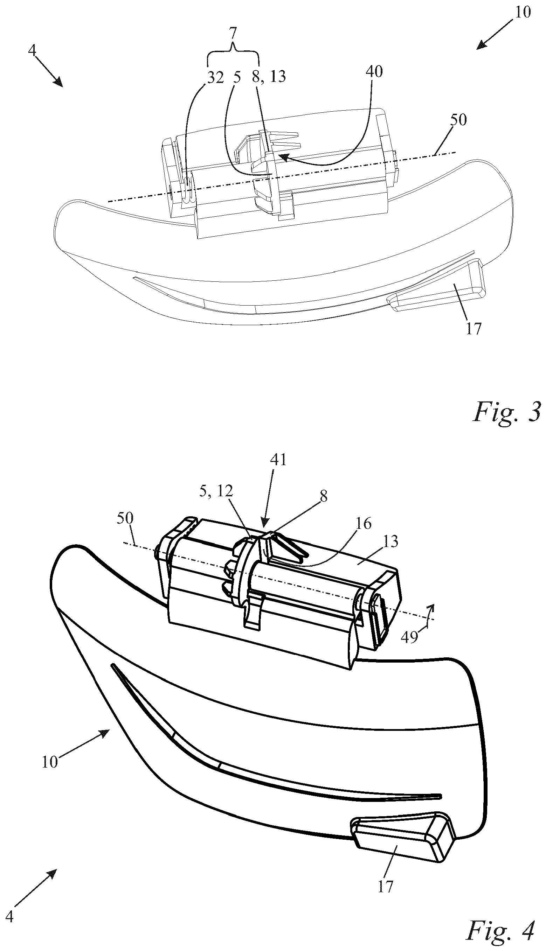

Die Figuren 2 und 3 zeigen die Abdeckvorrichtung 4 in ihrem geschlossenen Zustand 10. Die Abdeckvorrichtung 4 weist einen Grundkörper 13 auf. Der Grundkörper 13 ist am in Fig. 1 gezeigten Gehäuse 2 des Rasenmähers 1 unverschiebbar festgelegt. Es kann auch vorgesehen sein, dass der Grundkörper der Abdeckvorrichtung einteilig mit dem Gehäuse ausgebildet ist. Am Grundkörper 13 der in Fig. 2 dargestellten Abdeckvorrichtung 4 ist die Abdeckklappe 5 um die Schwenkachse 50 verschwenkbar gelagert. In Fig. 2 ist die Abdeckklappe 5 in einer Verriegelungsposition 40 dargestellt. In der Verriegelungsposition 40 ist die Abdeckklappe 5 im geschlossenen Zustand 10 der Abdeckklappe 5 gegen ein Schwenken um die Schwenkachse 50 gesichert. Hierzu weist die Abdeckvorrichtung 4 ein Verriegelungsmittel 7 auf.

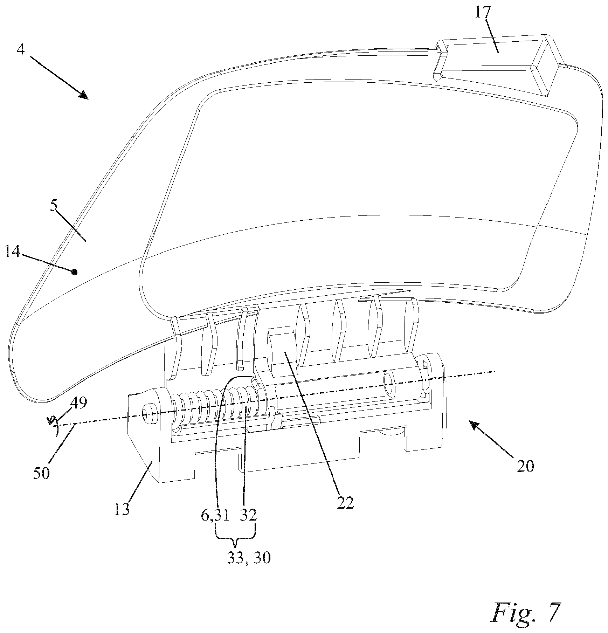

Nach Entriegelung der Abdeckklappe 5 kann diese aus dem geschlossenen Zustand 10 in einer Schwenkrichtung 49 in eine in den Figuren 6 und 7 dargestellte Offenposition 20 der Abdeckklappe 5 verschwenkt werden. Die Schwenkrichtung 49 verläuft in Umlaufrichtung der Schwenkachse 50 ausgehend von dem geschlossenen Zustand 10 hin zur Offenposition 20. Die Schwenkrichtung 49 läuft um die Schwenkachse 50 um.

Wie in Fig. 2 dargestellt, besitzt das Verriegelungsmittel 7 einen ersten Teil an der Abdeckklappe 5 und eine zweiten Teil am Grundkörper 13. In der Verriegelungsposition 40 überlappen sich der erste Teil der Abdeckklappe 5 und der zweite Teil des Grundkörpers 13 in Richtung der Schwenkachse 50 so, dass die Abdeckklappe 5 im geschlossenen Zustand 10 gegen ein Schwenken um die Schwenkachse 50 gesichert ist. In anderen Worten überlappen sich der erste Teil der Abdeckklappe 5 und der zweite Teil des Grundkörpers 13 in Richtung senkrecht zur Schwenkachse 50 gesehen.

Der erste Teil des Verriegelungsmittels 7 ist einteilig mit der Abdeckklappe 5 bzw. mit einem Abdeckkörper 14 der Abdeckklappe 5 ausgebildet. Im Ausführungsbeispiel ist der erste Teil des Verriegelungsmittels 7 durch einen Vorsprung 12 der Abdeckklappe 5 gebildet. Die Abdeckklappe 5 weist den Abdeckkörper 14 auf. Der Vorsprung 12 der Abdeckklappe 5 ist am Abdeckkörper 14 der Abdeckklappe 5 festgelegt. Der Vorsprung 12 steht über den Abdeckkörper 14 der Abdeckklappe 5 in Richtung radial zur Schwenkachse 50 vor. Der Vorsprung 12 weist in Schwenkrichtung 49 eine Stirnseite 15 auf.

Der zweite Teil des Verriegelungsmittels 7 ist im Ausführungsbeispiel durch eine Sperrkante 8 der Abdeckvorrichtung 4 gebildet. Die Sperrkante 8 ist am Grundkörper 13 der Abdeckvorrichtung 4 festgelegt. Die Sperrkante 8 ist einteilig mit dem Grundkörper 13 ausgebildet. Die Sperrkante 8 weist in Richtung entgegen der Schwenkrichtung 49 eine Stirnseite 16 auf.

In der Verriegelungsposition 40 liegt die Stirnseite 15 des Vorsprungs 12 an der Stirnseite 16 der Sperrkante 8 an. Dadurch kann die Abdeckklappe 5 nicht in Schwenkrichtung 49 um die Schwenkachse 50 verschwenkt werden. Die Abdeckklappe 5 ist in der Verriegelungsposition 40 des geschlossenen Zustands 10 durch das Verriegelungsmittel 7 verriegelt.

Das Verriegelungsmittel 7 umfasst die Abdeckklappe 5 und die Sperrkante 8. Zur Verriegelung der Abdeckklappe 5 ist der Vorsprung 12 der Abdeckklappe nicht unbedingt erforderlich. Alternativ kann auch vorgesehen sein, dass die Sperrkante in Form eines Steges in der Verriegelungsposition den Grundkörper der Abdeckklappe derart überlappt, dass die Abdeckklappe im geschlossenen Zustand gegen ein Schwenken um die Schwenkachse gesichert ist. In diesem Fall ist der erste Teil des Verriegelungsmittels lediglich als Teilstück des Grundkörpers der Abdeckklappe ausgebildet.

Wie sich aus der Zusammenschau der Figuren 2 bis 5 ergibt, ist die Abdeckklappe 5 relativ zum Gehäuse 2 in Richtung der Schwenkachse 50 axial beweglich. Folglich ist die Abdeckklappe 5 auch relativ zum Grundkörper 13 der Abdeckvorrichtung 4 in Richtung der Schwenkachse 50 verschiebbar. Durch eine Bewegung der Abdeckklappe 5 in Richtung der Schwenkachse 50 lässt sich die Abdeckklappe 5 entriegeln. Hierbei wird die Abdeckklappe 5 von der in den Figuren 2 und 3 dargestellten Verriegelungsposition 40 in eine in den Figuren 4 und 5 gezeigte Entriegelungsposition 41 geschoben. Im geschlossenen Zustand 10 kann sich die Abdeckklappe 5 in der Verriegelungsposition 40 oder in der Entriegelungsposition 41 befinden. Die Verriegelungsposition 40 und die Entriegelungsposition 41 sind zwei mögliche Positionen innerhalb des geschlossenen Zustands 10. Sowohl in der Verriegelungsposition 40 als auch in der Entriegelungsposition 41 befindet sich die Abdeckklappe 5 im geschlossenen Zustand 10. Ausgehend von der Entriegelungsposition 41 kann die Abdeckklappe 5 in Schwenkrichtung 49 um die Schwenkachse 50 in die Offenposition 20 verschwenkt werden. In der Entriegelungsposition 41 ist die Abdeckklappe 5 unverriegelt.

Die Abdeckklappe 5 ist in Richtung der Schwenkachse 50 relativ zum zweiten Teil des Verriegelungsmittels 7 derart verschiebbar, dass der erste Teil des Verriegelungsmittels 7 und der zweite Teil des Verriegelungsmittels 7 in Richtung der Schwenkachse 50 überlappungsfrei zueinander sind. In der Entriegelungsposition 41 sind der erste Teil des Verrieglungsmittels 7 und der zweite Teil des Verriegelungsmittels 7 in Richtung senkrecht zur Schwenkachse 50 gesehen überlappungsfrei. In der Entriegelungsposition 41 sind die Stirnseite 15 des Vorsprungs 12 und die Stirnseite 16 der Sperrkante 8 überlappungsfrei zueinander. Dadurch steht die Sperrkante 8 einer Schwenkbewegung der Abdeckklappe 5 in Schwenkrichtung 49 nicht im Weg. In der Entriegelungsposition 41 ist die Abdeckklappe 5 entriegelt.

Die Abdeckklappe 5 kann nur aus der in den Figuren 4 und 5 gezeigten Entriegelungsposition 41 durch eine reine Schwenkbewegung der Abdeckklappe 5 in die in den Figuren 6 und 7 dargestellte Offenposition 20 der Abdeckklappe 5 überführt werden. Um aus der Verriegelungsposition 40 der Figuren 2 und 3 in die Offenposition 20 der Figuren 6 und 7 zu gelangen, muss die Abdeckklappe 5 zunächst in Richtung der Schwenkachse 50 axial in die in den Figuren 4 und 5 dargestellte Entriegelungsposition 41 verschoben werden. Erst dann ist ein Verschwenken der Abdeckklappe 5 in Schwenkrichtung 49 möglich.

Wie in den Figuren 2 und 3 dargestellt, umfasst das Verriegelungsmittel 7 im Ausführungsbeispiel zusätzlich eine Axialfeder 32. Die Axialfeder 32 ist Teil einer in Fig. 7 dargestellten Federanordnung 30. Die Federanordnung 30 ist Teil der Abdeckvorrichtung 4. Die in den Figuren 2 und 3 dargestellte Axialfeder 32 wirkt zwischen dem Gehäuse 2 des Rasenmähers 1 und der Abdeckklappe 5 in Richtung der Schwenkachse 50. Die Axialfeder 32 wirkt zwischen dem Grundkörper 13 der Abdeckvorrichtung 4 und der Abdeckplatte 5 in Richtung der Schwenkachse 50. Die Axialfeder 32 bewirkt eine Kraft auf die Abdeckklappe 5 in Richtung von der Entriegelungsposition 41 auf die Verriegelungsposition 40 der Abdeckklappe 5. Es kann vorgesehen sein, dass es sich bei der Axialfeder um eine Zugfeder handelt. Im Ausführungsbeispiel ist die Axialfeder 32 eine Druckfeder. Die Axialfeder 32 drückt die Abdeckklappe in Richtung von der Entriegelungsposition 41 hin zur Verriegelungsposition 40. Dadurch ist ein Sicherheitsmechanismus geschaffen, der dafür sorgt, dass die Abdeckklappe 5 im geschlossenen Zustand 10 automatisch verriegelt wird. Zur Entriegelung der Abdeccklappe 5 muss eine Kraft entgegen der von der Axialfeder 32 erzeugten Kraft aufgebracht werden. Hierzu muss die Abdeckklappe 5 in Richtung von der Verrieglungsposition 40 auf die Entriegelungsposition 41 entlang der Schwenkachse 50 bewegt werden. Hierfür weist die Abdeckklappe 5 einen am Abdeckkörper 14 der Abdeccklappe 5 festgelegten Griff 17 auf. Der Griff 17 steht über den Abdeckkörper 14 der Abdeckklappe 5 hervor.

Aus der in den Figuren 4 und 5 gezeigten Entriegelungsposition 41, kann die Abdeccklappe 5 in Schwenkrichtung 49 um die Schwenkachse 50 in die in den Figuren 6 und 7 dargestellte Offenposition 20 verschwenkt werden. Dabei kann eine in den Figuren 5 und 6 dargestellte Anlagefläche 18 des Vorsprungs 12 der Abdeckklappe 5 an einer ebenfalls in den Figuren 5 und 6 dargestellten Auflagefläche 9 der Sperrkante 8 des Grundkörpers 13 anliegen. Die Auflagefläche 9 der Sperrkante 8 zeigt in die eine Richtung der Schwenkachse 50. Die Anlagefläche 18 des Vorsprungs 12 zeigt in die andere Richtung der Schwenkachse 50. Die Anlagefläche 18 des Vorsprungs 12 und die Auflagefläche 9 der Sperrkante 8 sind einander zugewandt. Die Anlage der Anlagefläche 18 an der Auflagefläche 19 in der Offenposition 20 verhindert ein Verschieben der Abdeckklappe in Richtung der Schwenkachse 50 in Richtung von der Entriegelungsposition 41 auf die Verriegelungsposition 40. Die Federanordnung 30 spannt die Abdeckklappe 5 in der Offenposition 20 der Abdeckklappe 5 gegen die Auflagefläche 9 der Sperrkante 8 vor. Die Abdeckklappe 5 wird von der Axialfeder 32 in der Offenposition 20 in Richtung der Schwenkachse 50 in Richtung von der Entriegelungsposition 41 auf die Verriegelungsposition 40 gegen den Grundkörper 13 gedrückt. Der Vorsprung 12 der Abdeckklappe 5 wird gegen die Sperrkante 8 des Grundkörpers 13 gedrückt. Erst wenn die Abdeckklappe 5 wieder in den geschlossenen Zustand 10 bewegt wurde, ist eine Bewegung in Richtung von der Entriegelungsposition 41 hin zur Verriegelungsposition 40 entlang der Schwenkachse 50 möglich. Erst im geschlossenen Zustand 10 der Abdeckklappe 5 kann die Abdeckklappe 5 in die Verriegelungsposition 40 bewegt werden.

Im Ausführungsbeispiel ist die Auflagefläche 9 zumindest teilweise in einer Mulde 21 des Grundkörpers 13 der Abdeckvorrichtung 4 ausgebildet. Die Anlagefläche 18 des Vorsprungs 12 ist teilweise in einer Mulde 22 des Abdeckkörpers 14 der Abdeckklappe 5 ausgebildet. Durch die Mulde 21 ist eine Vertiefung im Grundkörper 13 der Abdeckvorrichtung 4 ausgebildet. Durch die Mulde 22 ist eine Vertiefung im Abdeckkörper 14 der Abdeckklappe 5 ausgebildet. Dadurch lässt sich die Abdeckklappe 5 sehr weit öffnen. Im vollständig geöffneten Zustand der Abdeckklappe 5, der in den Figuren 6 und 7 dargestellt ist, greift der Vorsprung 12 der Abdeckklappe 5 in die Mulde 21 des Grundkörpers 13 der Abdeckvorrichtung 4 ein. Ebenso greift die Sperrkante 8 des Grundkörpers 13 in die Mulde 22 des Abdeckkörpers 14 der Abdeckklappe 5 ein. Der Vorsprung 12 ist teilweise in der Mulde 21 versenkt. Die Sperrkante 8 ist teilweise in der Mulde 22 versenkt.

Wie in Fig. 7 dargestellt, umfasst die Abdeckvorrichtung 4 ein Rückstellmittel 6. Das Rückstellmittel 6 beaufschlagt die Abdeckklappe 5 in der Offenposition 20 mit einer Kraft in Richtung auf den geschlossenen Zustand 10. Diese Kraft wirkt entgegen der Schwenkrichtung 49. Dadurch ist gewährleistet, dass die Abdeckklappe 5 selbstständig aus der Offenposition 20 in den geschlossenen Zustand 10 zurückkehrt. Die Abdeccklappe 5 ist aufgrund der vom Rückstellmittel 6 ausgeübten Kraft rastfrei aus der Offenposition 20 in den geschlossenen Zustand 10 verstellbar.

Das Rückstellmittel 6 umfasst eine Drehfeder 31. Die Drehfeder 31 ist Teil der Federanordnung 30. Die Drehfeder 31 wirkt zwischen der Abdeckklappe 5 und dem Gehäuse 2. Die Drehfeder 31 wirkt zwischen der Abdeckklappe 5 und dem Grundkörper 13 der Abdeckvorrichtung 4. Die Drehfeder 31 bewirkt eine Kraft auf die Abdeckklappe 5 entgegen der Schwenkrichtung 49. Die Kraft der Drehfeder 31 wirkt in Richtung von der Offenposition 20 hin auf den geschlossenen Zustand 10. Die Kraft der Drehfeder 31 bewirkt ein Verschwenken der Abdeckklappe 5 um die Schwenkachse 50 entgegen der Schwenkrichtung 49.

Wenn sich die Abdeckklappe 5 in vollständig geöffnetem Zustand befindet und nicht - beispielsweise durch den Auswurftrichter - in diesem Zustand gehalten wird, wird die Abdeckklappe 5 zunächst durch das Rückstellmittel 6 in die Entriegelungsposition 41 des geschlossenen Zustands 10 bewegt und anschließend von der Axialfeder 32 des Verriegelungsmittels 7 von der Entriegelungsposition 41 in die Verriegelungsposition 40 des geschlossenen Zustands 10 bewegt. Dadurch ist sichergestellt, dass die Abdeckklappe 5 aus der Offenposition 20 immer selbstständig in die Verriegelungsposition 40 zurückkehrt. Dadurch ist die Abdeckklappe sicher verriegelt. Um sie zu öffnen, muss sie zunächst axial in Richtung der Schwenkachse 50 bewegt und entriegelt werden, und anschließend in Schwenkrichtung 49 in die Offenposition 20 verschwenkt werden.

Im Ausführungsbeispiel ist die in Fig. 7 dargestellte Federanordnung 30 eine kombinierte Axial- und Drehfeder 33. Die kombinierte Axial- und Drehfeder 33 umfasst die Drehfeder 31 und die Axialfeder 32. Die kombinierte Axial- und Drehfeder 33 ist sowohl Teil des Rückstellmittels 6 als auch Teil des Verriegelungsmittels 7. Die kombinierte Axial- und Drehfeder 33 ist eine kombinierte Druck- und Drehfeder.

## Patentansprüche

1. Rasenmäher mit einem Gehäuse (2), das eine Auswurföffnung (3) zum Auswurf von Schnittgut aufweist, und mit einer am Gehäuse (2) festgelegten Abdeckvorrichtung (4), wobei die Abdeckvorrichtung (4) eine Abdeckklappe (5) und ein Verriegelungsmittel (7) umfasst, wobei die Abdeckklappe (5) um eine Schwenkachse (50) schwenkbar ist, wobei die Abdeckklappe (5) in einem geschlossenen Zustand (10) die Auswurföffnung (3) abdeckt, wobei die Abdeckklappe (5) in einer Offenposition (20) die Auswurföffnung (3) freigibt, wobei die Abdeckklappe (5) im geschlossenen Zustand (10) mittels des Verriegelungsmittels (7) verriegelbar ist,
**dadurch gekennzeichnet, dass** die Abdeckklappe (5) relativ zum Gehäuse (2) in Richtung der Schwenkachse (50) beweglich ist, und dass sich die Abdeckklappe (5) durch eine Bewegung der Abdeckklappe (5) in Richtung der Schwenkachse (50) entriegeln lässt.

2. Rasenmäher nach Anspruch 1,
**dadurch gekennzeichnet, dass** die Abdeckvorrichtung (4) ein Rückstellmittel (6) umfasst, wobei das Rückstellmittel (6) die Abdeckklappe (5) in der Offenposition (20) mit einer Kraft in Richtung auf den geschlossenen Zustand (10) beaufschlagt.

3. Rasenmäher nach Anspruch 2,
**dadurch gekennzeichnet, dass** die Abdeckklappe (5) aufgrund der vom Rückstellmittel (6) ausgeübten Kraft rastfrei aus der Offenposition (20) in den geschlossenen Zustand (10) verstellbar ist.

4. Rasenmäher nach einem der Ansprüche 1 bis 3,
**dadurch gekennzeichnet, dass** die Abdeckvorrichtung (4) eine Federanordnung (30) umfasst.

5. Rasenmäher nach Anspruch 4,
**dadurch gekennzeichnet, dass** die Federanordnung (30) eine Drehfeder (31) umfasst, und dass die Drehfeder (31) Teil des Rückstellmittels (6) ist.

6. Rasenmäher nach Anspruch 4 oder 5,
**dadurch gekennzeichnet, dass** die Federanordnung (30) eine Axialfeder (32) umfasst, dass die Axialfeder (32) Teil des Verriegelungsmittel (7) ist, und dass die Axialfeder (32) zwischen dem Gehäuse (2) und der Abdeckklappe (5) in Richtung der Schwenkachse (50) wirkt.

7. Rasenmäher nach Anspruch 6,
**dadurch gekennzeichnet, dass** die Axialfeder (32) eine Druckfeder ist.

8. Rasenmäher nach einem der Ansprüche 4 bis 7,
**dadurch gekennzeichnet, dass** die Federanordnung (30) eine kombinierte Axial- und Drehfeder (33) ist, und dass die kombinierte Axial- und Drehfeder (33) sowohl Teil des Rückstellmittels (6) als auch Teil des Verriegelungsmittels (7) ist.

9. Rasenmäher nach einem der Ansprüche 1 bis 8,
**dadurch gekennzeichnet, dass** das Verriegelungsmittel (7) einen ersten Teil an der Abdeckklappe (5) besitzt, dass das Verriegelungsmittel (7) einen zweiten gehäusefesten Teil besitzt, und dass sich der erste Teil und der zweite Teil des Verriegelungsmittels (7) in einer Verriegelungsposition (40) der Abdeckklappe (5) im geschlossenen Zustand (10) in Richtung der Schwenkachse (50) so überlappen, dass die Abdeckklappe (5) in der Verriegelungsposition (40) gegen ein Schwenken um die Schwenkachse (50) gesichert ist.

10. Rasenmäher nach Anspruch 9,
**dadurch gekennzeichnet, dass** die Abdeckklappe (5) in Richtung der Schwenkachse (50) relativ zum zweiten Teil des Verriegelungsmittels (7) derart verschiebbar ist, dass der erste Teil des Verriegelungsmittels (7) und der zweite Teil des Verriegelungsmittels (7) in Richtung der Schwenkachse (50) überlappungsfrei zueinander sind.

11. Rasenmäher nach Anspruch 9 oder 10,
**dadurch gekennzeichnet, dass** der erste Teil des Verriegelungsmittels (7) einteilig mit der Abdeckklappe (5) ausgebildet ist.

12. Rasenmäher nach einem der Ansprüche 9 bis 11,
**dadurch gekennzeichnet**, die Abdeckvorrichtung (4) einen Grundkörper (13) umfasst, mit dem die Abdeckvorrichtung am Gehäuse (2) des Rasenmähers (1) unverschiebbar festgelegt ist, und dass der zweite Teil des Verriegelungsmittels (7) durch eine am Grundkörper (13) festgelegte Sperrkante (8) gebildet ist.

13. Rasenmäher Anspruch 12,
**dadurch gekennzeichnet, dass** die Sperrkante (8) in Richtung der Schwenkachse (50) eine Auflagefläche (9) aufweist, und dass die Federanordnung (30) in der Offenposition (20) der Abdeckklappe (5) die Abdeckklappe (5) gegen die Auflagefläche (9) der Sperrkante (8) vorspannt.

## Claims

1. Lawn mower having a housing (2) that has an ejection opening (3) for ejecting cut material, and having a covering device (4) fixed to the housing (2), wherein the covering device (4) comprises a covering flap (5) and a locking means (7), wherein the covering flap (5) is pivotable about a pivot axis (50), wherein the covering flap (5) covers the ejection opening (3) in a closed state (10), wherein the covering flap (5) frees up the ejection opening (3) in an open position (20), wherein the covering flap (5) is able to be locked by means of the locking means (7) in the closed state (10),
**characterized in that** the covering flap (5) is movable in the direction of the pivot axis (50) relative to the housing (2), and **in that** the covering flap (5) can be unlocked by the covering flap (5) being moved in the direction of the pivot axis (50).

2. Lawn mower according to Claim 1,
**characterized in that** the covering device (4) comprises a restoring means (6), wherein the restoring means (6) applies a force in the direction of the closed state (10) to the covering flap (5) in the open position (20).

3. Lawn mower according to Claim 2,
**characterized in that** the covering flap (5), on account of the force exerted by the restoring means (6), is adjustable from the open position (20) into the closed state (10) without catching.

4. Lawn mower according to one of Claims 1 to 3,
**characterized in that** the covering device (4) comprises a spring arrangement (30).

5. Lawn mower according to Claim 4,
**characterized in that** the spring arrangement (30) comprises a torsion spring (31), and **in that** the torsion spring (31) is part of the restoring means (6).

6. Lawn mower according to Claim 4 or 5,
**characterized in that** the spring arrangement (30) comprises an axial spring (32), **in that** the axial spring (32) is part of the locking means (7), and **in that** the axial spring (32) acts between the housing (2) and the covering flap (5) in the direction of the pivot axis (50).

7. Lawn mower according to Claim 6,
**characterized in that** the axial spring (32) is a compression spring.

8. Lawn mower according to one of Claims 4 to 7,
**characterized in that** the spring arrangement (30) is a combined axial and torsion spring (33), and **in that** the combined axial and torsion spring (33) is both part of the restoring means (6) and part of the locking means (7).

9. Lawn mower according to one of Claims 1 to 8,
**characterized in that** the locking means (7) has a first part on the covering flap (5), **in that** the locking means (7) has a second part fixed to the housing, and **in that** the first part and the second part of the locking means (7) overlap in the direction of the pivot axis (50) in a locked position (40) of the covering flap (5) in the closed state (10) such that the covering flap (5) in the locked position (40) is secured against pivoting about the pivot axis (50).

10. Lawn mower according to Claim 9,
**characterized in that** the covering flap (5) is movable in the direction of the pivot axis (50) relative to the second part of the locking means (7) such that the first part of the locking means (7) and the second part of the locking means (7) are free of an overlap with respect to one another in the direction of the pivot axis (50).

11. Lawn mower according to Claim 9 or 10,
**characterized in that** the first part of the locking means (7) is formed in one piece with the covering flap (5).

12. Lawn mower according to one of Claims 9 to 11,
**characterized in that** the covering device (4) comprises a main body (13) with which the covering device is fixed immovably to the housing (2) of the lawn mower (1), and **in that** the second part of the locking means (7) is formed by a blocking edge (8) fixed to the main body (13).

13. Lawn mower according to Claim 12,
**characterized in that** the blocking edge (8) has a contact face (9) in the direction of the pivot axis (50), and **in that** the spring arrangement (30) preloads the covering flap (5) against the contact face (9) of the blocking edge (8) in the open position (20) of the covering flap (5).

## Revendications

1. Tondeuse à gazon comportant un carter (2) qui comprend une ouverture d'éjection (3) pour l'éjection de produits coupés, et comportant un dispositif de recouvrement (4) fixé au carter (2), le dispositif de recouvrement (4) comportant un volet de recouvrement (5) et un moyen de verrouillage (7), le volet de recouvrement (5) pouvant pivoter autour d'un axe de pivotement (50), le volet de recouvrement (5) recouvrant l'ouverture d'éjection (3) dans un état fermé (10), le volet de recouvrement (5) libérant l'ouverture d'éjection (3) dans une position ouverte (20), le volet de recouvrement (5) pouvant être verrouillé par le biais du moyen de verrouillage (7) dans l'état fermé (10),
**caractérisée en ce que** le volet de recouvrement (5) est mobile par rapport au carter (2) en direction de l'axe de pivotement (50), et **en ce que** le volet de recouvrement (5) peut être déverrouillé par un mouvement du volet de recouvrement (5) en direction de l'axe de pivotement (50).

2. Tondeuse à gazon selon la revendication 1,
**caractérisée en ce que** le dispositif de recouvrement (4) comporte un moyen de rappel (6), le moyen de rappel (6) sollicitant le volet de recouvrement (5) dans la position ouverte (20) en direction de l'état fermé (10) par une force.

3. Tondeuse à gazon selon la revendication 2,
**caractérisée en ce que** le volet de recouvrement (5), en raison de la force exercée par le moyen de rappel (6), est déplaçable sans pause à partir de la position ouverte (20) dans l'état fermé (10).

4. Tondeuse à gazon selon l'une des revendications 1 à 3,
**caractérisée en ce que** le dispositif de recouvrement (4) comporte un ensemble ressort (30).

5. Tondeuse à gazon selon la revendication 4,
**caractérisée en ce que** l'ensemble ressort (30) comporte un ressort de torsion (31), et **en ce que** le ressort de torsion (31) fait partie du moyen de rappel (6).

6. Tondeuse à gazon selon la revendication 4 ou 5,
**caractérisée en ce que** l'ensemble ressort (30) comporte un ressort axial (32), **en ce que** le ressort axial (32) fait partie du moyen de verrouillage (7), et **en ce que** le ressort axial (32) agit entre le carter (2) et le volet de recouvrement (5) en direction de l'axe de pivotement (50).

7. Tondeuse à gazon selon la revendication 6,
**caractérisée en ce que** le ressort axial (32) est un ressort de compression.

8. Tondeuse à gazon selon l'une des revendications 4 à 7,
**caractérisée en ce que** l'ensemble ressort (30) est un ressort axial et de torsion (33) combiné, et **en ce que** le ressort axial et de torsion (33) combiné fait à la fois partie du moyen de rappel (6) et du moyen de verrouillage (7).

9. Tondeuse à gazon selon l'une des revendications 1 à 8,
**caractérisée en ce que** le moyen de verrouillage (7) possède une première partie au niveau du volet de recouvrement (5), **en ce que** le moyen de verrouillage (7) possède une deuxième partie solidaire du carter, et **en ce que** la première partie et la deuxième partie du moyen de verrouillage (7) se chevauchant en direction de l'axe de pivotement (50) dans une position de verrouillage (40) du volet de recouvrement (5) dans l'état fermé (10), de telle sorte que le volet de recouvrement (5) soit fixé de manière à empêcher un pivotement autour de l'axe de pivotement (50) dans la position de verrouillage (40).

10. Tondeuse à gazon selon la revendication 9,
**caractérisée en ce que** le volet de recouvrement (5) est déplaçable par rapport à la deuxième partie du moyen de verrouillage (7) en direction de l'axe de pivotement (50), de telle sorte que la première partie du moyen de verrouillage (7) et la deuxième partie du moyen de verrouillage (7) ne se chevauchent pas en direction de l'axe de pivotement (50).

11. Tondeuse à gazon selon la revendication 9 ou 10,
**caractérisée en ce que** la première partie du moyen de verrouillage (7) est réalisée d'un seul tenant avec le volet de recouvrement (5).

12. Tondeuse à gazon selon l'une des revendications 9 à 11,
**caractérisée en ce que** le dispositif de recouvrement (4) comporte un corps de base (13) par lequel le dispositif de recouvrement est fixé de manière non déplaçable au carter (2) de la tondeuse à gazon (1), et **en ce que** la deuxième partie du moyen de verrouillage (7) est formée par une arête de blocage (8) fixée au corps de base (13).

13. Tondeuse à gazon selon la revendication 12,
**caractérisée en ce que** l'arête de blocage (8) comprend une surface d'appui (9) en direction de l'axe de pivotement (50), et **en ce que** l'ensemble ressort (30) précontraint le volet de recouvrement (5) contre la surface d'appui (9) de l'arête de blocage (8) dans la position ouverte (20) du volet de recouvrement (5).
